# EUROPEAN PATENT APPLICATION

(11) **EP 3 098 719 A1**
(43) Date of publication of application: **30.11.2016**
(21) Application number: 15169709.1
(22) Date of filing: 28.05.2015
(51) Int. Cl.: G06F 13/40

(54) **SELF-ASSIGNMENT PLUG-IN EXPANSION MODULES AND SYSTEM**

(71) Applicant: ABB Technology AG, 8050 Zürich (CH)
(72) Inventor: TAZZARI, Davide, 52024 Loro Ciuffenna (AR) (IT); VERNIA, Filippo, 19121 La Spezia (SP) (IT); FIACCHINI, Gabriele, 52024 San Giovanni Valdarno (AR) (IT); LAMOGLIE, Luigi, 52028 Terranuova Bracciolini (AR) (IT)
(74) Representative: Mannucci, Michele

(57) **Abstract**

An expansion board is disclosed, which comprises a set of input connectors (CHk(O)) and a set of ouput connectors CHm(O)). One of the input connectors is electrically coupled to an electronic device (9) arranged on the expansion board. The remaining input connectors are electrically coupled to the output connectors. The electric coupling is such that if a sequence of expansion boards (5) equal to the number of input connectors (CHk(I)) are connected to one another, each input connector (CHk(I)) of the first expansion board (5) is in electronic communication with a corresponding one of the electronic devices (9) of the expansion boards, the sequence of electronic devices (9) being a permutation of the sequence of input connectors CHk(I).

## Description

### FIELD OF THE INVENTION

Disclosed herein is an expansion module or expansion board for an electronic system comprised of a base unit and an electronic connection arrangement for data exchange with one or more expansion modules.

### BACKGROUND ART

Several installations, where several electronic facilities or devices are provided, require communication between the electronic facilities and a central unit, for instance a data logger. E.g. in renewable energy plants a plurality of electric generators are used in combination and each generator can be electronically connected to a data logger for data gathering, diagnostic purposes, control of the generators and the like. For instance in photovoltaic solar plants, a plurality of photovoltaic panel arrangements collect radiant solar power and convert the latter in electric power. Similarly, in wind farms a plurality of wind turbines convert wind power into DC electric power. The electric power generated is often converted into AC power and used to power electric and electronic devices and/or distributed to remote users via an electric power distribution grid.

Inverters are combined to the electric generators to convert and condition the electric power generated thereby. The inverters are usually in data communication with a data logger, which can collect data on the power produced by each inverter, on the electrical input data (such as voltage and current) of the inverters and other electric and non-electric parameters, such as temperature and the like. The data logger can also gather data on events or alarms from the electronic or electric devices connected thereto and can process the gathered information to provide some high level overview of the collected information.

Data loggers typically also offer embedded web server as well as local and remote connectivity and are able to send and/or receive information to and from a remote web portal.

Data logger commissioning is made manually by associating several inputs/outputs to the sensors, actuators or other devices installed in the plant and which require monitoring and external control instructions, provide information or in any way need a data connection with the data logger.

Data loggers, as well as other central units, usually have expandability, i.e. can be connected to one or more expansion modules or expansion boards. The expansion boards or expansion modules can be identical to one another or different from one another. This approach allows the installer to use only the strictly required expansion modules or boards, depending upon the plant layout. The plant capability can be expanded by adding extra expansion modules if required, for instance if additional electric generators, such as wind turbines or photovoltaic panels, are added to an already existing installation.

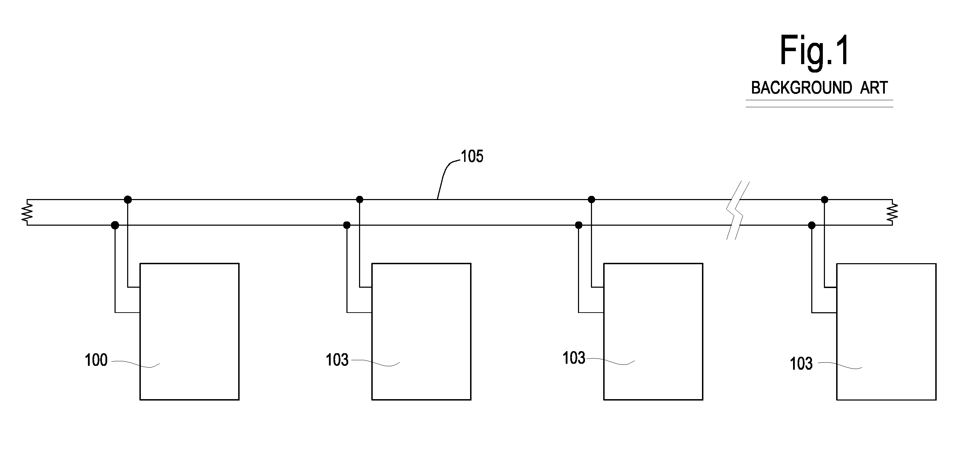

According to the current art, the connection between the central unit and the expansion modules is usually by means of a serial bus, such as a CAN serial bus. Fig.1 illustrates a schematic of a central unit 100 which is connected to a plurality of expansion boards or expansion modules 103 via a serial bus 105.

When expansion modules are connected to a central unit, such as a data logger, in particular if several such expansion modules of the same type are used, it is necessary to individually identify and localize each expansion module in the system. Currently, several methods are used to assist in identifying the expansion modules during configuration of the system. For instance LED or other visual systems can be provided. In some cases one of the inputs of the expansion module can be used to identify the module. These known systems are impractical and may result in localizing errors.

A need therefore exists for a simpler and faster assignment of communication channels between a central unit or base unit and a plurality of expansion modules or expansion boards, which can make commissioning of a system comprised of a central unit and a plurality of expansion boards or modules simpler.

### SUMMARY OF THE INVENTION

The above is achieved by means of an electronic expansion board comprising at least one electronic device configured for data communication through at least one connector; a number of input connectors arranged according to an input connectors sequence and comprising at least a first input connector and a last input connector; a number of output connectors arranged according to an output connectors sequence. The number of output connectors can be one less than the number of input connectors. Therefore, if the number of input connectors is two, the number of output connectors can be just one.

At least one of the input connectors is connected to the at least one electronic device of the expansion board. The remaining input connectors are each electrically coupled to a respective one of the output connectors.

In embodiments disclosed herein, the output connectors and the input connectors are positioned on the electronic expansion board such that, when two expansion boards are connected to one another, the output connectors of one of said electronic expansion boards are plugged into corresponding input connectors of the other of said two electronic expansion boards.

In embodiments disclosed herein, the mutual positions of the output connectors in the output connectors sequence and the mutual positions of the input connectors electrically coupled thereto in the input connectors sequence are such that, if a number of electronic expansion boards equal to the number of input connectors are sequentially connected to one another from a first one to a last one by plugging-in the input connectors and output connectors of neighboring electronic expansion boards, the electronic device of each electronic expansion board is electrically coupled to a respective one of the input connectors of the first electronic expansion board. The mutually connected expansion boards have the same arrangement of input connectors and output connectors as well as the same electric coupling between input connectors, output connectors and electronic device.

According to embodiments disclosed herein, an electronic expansion board is further provided, comprising at least one electronic device configured for data communication through an electric connector; a number of input connectors arranged according to an input connectors sequence and comprising at least a first input connector and a last input connector; a number of output connectors arranged according to an output connectors sequence. The output connectors and the input connectors can be positioned on the electronic expansion board such that, when two expansion boards are connected to one another, the output connectors of one of said electronic expansion boards are plugged into corresponding input connectors of the other of said two electronic expansion boards. One of the input connectors is electrically coupled to the at least one electronic device, and each of the remaining input connectors is electrically coupled to a respective one of the output connectors. The electronic expansion boards have the same arrangement of input connectors and output connectors and the same electric coupling between input connectors, output connectors and electronic device. Moreover the mutual positions of the output connectors in the output connectors sequence is a permutation of the mutual positions of the corresponding input connectors, wherewith the output connectors are electrically coupled, in the input connectors sequence.

According to further embodiments, an electronic expansion board is disclosed herein, comprising: at least one electronic device configured for data communication through an electric connector; a number of input connectors arranged according to an input connectors sequence and comprising at least a first input connector and a last input connector; a number of output connectors arranged according to an output connectors sequence. The output connectors and the input connectors can be positioned on the electronic expansion board such that, when two expansion boards, are connected to one another, the output connectors of one of said electronic expansion boards are plugged into corresponding input connectors of the other of said two electronic expansion boards. Moreover, one of the input connectors is electrically coupled to the electronic device and each of the remaining input connectors is electrically coupled to a respective one of the output connectors. The output connectors sequence is a permutation of the input connectors sequence such that when a number of electronic expansion boards equal to the number of input connectors are connected to one another, each electronic device is electrically coupled to a respective one of the input connectors of the first electronic expansion board, the expansion boards having the same arrangement of input connectors and output connectors and the same electric coupling between input connectors, output connectors and electronic device.

The structure of the electronic expansion board according to the present disclosure results in the following: each electronic device of a plurality of expansion boards connected to a base unit will be automatically connected to a specific one of a plurality of communication channels, the base unit is provided with, wherein the number of communication channels is identical to the number of input connectors of the expansion boards.

It is thus possible to know which communication channel of the base unit is in data communication with a given electronic device, once the position of the electronic device (i.e. of the expansion board whereon the electronic device is mounted) is known, or vice versa. This, for instance, helps the installer to configure the base unit properly.

Additional features and embodiments of an electronic expansion board and of a system including a base unit and one or more electronic expansion boards are described herein below, reference being made to exemplary embodiments, and in the attached claims, which form an integral part of the present disclosure.

### BRIEF DESCRIPTION OF THE DRAWINGS

A more complete appreciation of the disclosed embodiments of the invention and many of the attendant advantages thereof will be readily obtained as the same becomes better understood by reference to the following detailed description when considered in connection with the accompanying drawings, wherein:
Fig.1 illustrates a schematic of a system of the current art;
Fig.2 illustrates a schematic of an exemplary embodiment of a system according to the present disclosure;
Fig.3 illustrates a schematic of a further exemplary embodiment of a system according to the present disclosure;
Fig.4 illustrates a further embodiment of an expansion module or board according to the disclosure;
Figs. 5, 5A illustrate a yet further embodiment of a system according to the present disclosure;
Figs. 6, 6A; 7, 7A; 8, 8A; 9, 9A illustrate further embodiments of the system according to the present disclosure;
Fig.10 illustrates a further system including a plurality of hubs which replicate each communication channel of a single base unit, for connection of sixteen expansion boards thereto.

### DETAILED DESCRIPTION OF EMBODIMENTS OF THE INVENTION

The following detailed description of the exemplary embodiments refers to the accompanying drawings. The same reference numbers in different drawings identify the same or similar elements. Additionally, the drawings are not necessarily drawn to scale. Also, the following detailed description does not limit the invention. Instead, the scope of the invention is defined by the appended claims.

Reference throughout the specification to "one embodiment" or "an embodiment" or "some embodiments" means that the particular feature, structure or characteristic described in connection with an embodiment is included in at least one embodiment of the subject matter disclosed. Thus, the appearance of the phrase "in one embodiment" or "in an embodiment" or "in some embodiments" in various places throughout the specification is not necessarily referring to the same embodiment(s). Further, the particular features, structures or characteristics may be combined in any suitable manner in one or more embodiments.

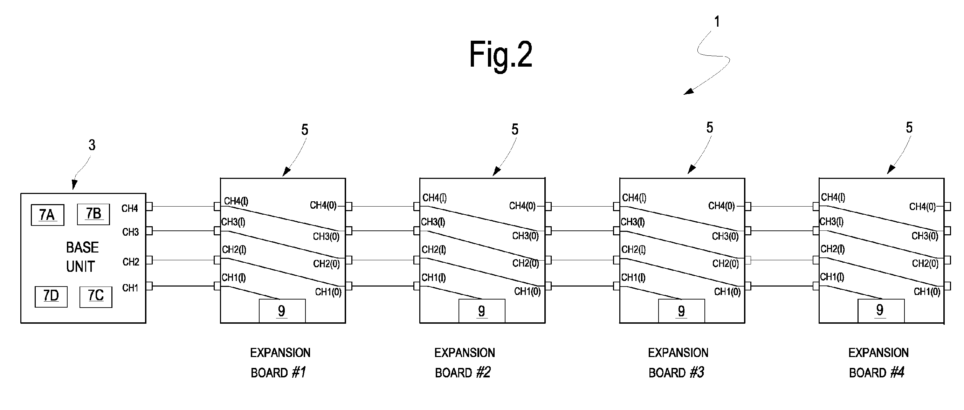

A first embodiment of the subject matter disclosed herein will be described with reference to the schematic of Fig. 2, wherein a block diagram of an exemplary embodiment of a system 1 is illustrated. The system 1 includes a central unit or base unit, such as for instance a data logger, schematically shown at 3. The system 1 further includes a plurality of electronic expansion boards or expansion modules 5. In Fig.2 each expansion board or expansion module 5 is indicated as "Expansion Board #n" wherein n=1, 2, 3, 4. The expansion boards or expansion modules 5 can be for instance I/O boards. Additional I/O expansion boards can be connected to the base unit 3 in a manner to be described herein after, e.g. if an increased number of electric or electronic devices must be placed in data communication with the base unit 3. In the exemplary embodiment of Fig.2 the expansion boards 5 are identical to one another, but this is not essential. What matters is that an identical arrangement of input connectors, output connectors and electric coupling between the input connectors, output connectors and devices on the expansion board is used on each board.

In the context of the present description and attached claims, the term "identical" when referred to the expansion boards 5 is referred to the layout of the input connectors, output connectors and electric coupling there between and with the electric device on the electronic expansion board.

The base unit 3 can comprise one or more electronic devices 7A, 7B, 7C, 7D mounted thereon, for instance a microprocessor, memory chips, user's interfaces, such as LCD or key pads, and the like.

In exemplary embodiments, the base unit 3 comprises a plurality of communication channels. In the example shown in Fig. 2 only four such communication channels are shown and labeled CH1, CH2, CH3, CH4, respectively. The number of communication channels is for the sake of explaining the basic principle of the system according to the present disclosure, but it shall be understood that a different number of communication channels can be provided on the base unit 3.

Each expansion module or expansion board 5 can comprise a number of input connectors arranged to an input connectors sequence. The input connectors are labeled CHk(I), wherein k = 1, 2, 3, 4 indicates the sequential number of each input connector. The number of input connectors is preferably identical to the number of communication channels CHj available on the base unit 3, such that in the exemplary embodiment of Fig.2 there are four input connectors CHk(I) for each expansion module or expansion board 5.

Furthermore, each expansion module or expansion board 5 can comprise a number of output connectors CHm(O), wherein m=1, 2, 3, 4, arranged according to an output connectors sequence. In the exemplary embodiment illustrated in Fig.2 the number of output connectors CHm(O) used to propagate signal is one less than the number of input connectors CHk(I). The remain output CH4(O) does not propagate any signal and is not connected to any one of the input connectors CHk(I).

As schematically shown in Fig. 2, each expansion board or expansion module 5 further comprises at least one electronic device. The kind and nature, as well as the number of electronic devices 9 on each expansion board or expansion module 5 depend upon the kind of expansion board.

In the exemplary embodiment of Fig.2 the electronic device 9 is in data communication with the first input connector CH1(I) such that through the input connector CH1(I) the electronic device 9 is in data communication with the first communication channel CH1 of the base unit 3. Each one of the remaining input connectors CHk(I) (with k=2, 3, 4) is electrically coupled with a corresponding one of the output connectors CHm(O) (with m = 1, 2, 3). More specifically, the sequence of input connectors CH2(I) to CH4(I) are orderly coupled to the sequence of output connectors CH1(O) to CH3(O).

A dummy output connector CH4(O) can be provided, as shown by way of example on Expansion Board #1. The dummy output connector is isolated, i.e. it is not electrically coupled to any one of the input connectors CHk(I), such that no data-communication is provided on the dummy output connector. It is present only for mechanical reason and can be removed if the enclosure so permits.

The next expansion board or expansion module 5, labeled "Expansion Board #2", is provided with the same number of input connectors CHk(I) (with k=1 to 4) and the same number of output connectors CHm(O) (with m=1 to 3) as Expansion Board #1 as well as with the same number of electronic devices (9) electrically coupled with an input connector CHk(I). The last three input connectors CH2(I), CH3(I), CH4(I) are electrically coupled to the output connectors CH1(O), CH2(O) and CH3(O) as explained above, while the last output connector CH4(O) is not electrically coupled to the upstream Expansion Board #1. The first input connector CH1(I) is electrically coupled to the electronic device 9 of the Expansion Board #2, such that the device 9 of Expansion Board #2 is in data communication with the second communication channel CH2 of the base unit 3 through input connector CH1(I) of Expansion board #2 as well as through output connector CH1(O) and input connector CH2(I) of Expansion board #1.

A similar connection as between Expansion Board #1 and Expansion Board #2 is provided between this latter and Expansion Board #3, such that the electronic device 9 of Expansion Board #3 is in data communication with communication channel CH3 of the base unit 3. With a similar arrangement, the electronic device 9 of Expansion Board #4 is in data communication with the fourth communication channel CH4 of the base unit 3.

As can be understood from Fig.2, all expansion boards 5 are thus identical to one another in the sense that they have the same number of input connectors CHk(I), the same number of output connectors CHm(O), the same electric coupling between the device 9 and the input and output connectors.

By means of the arrangement and mutual connection of input connectors CHk(I) and output connectors CHm(O) as described above, each electronic device 9 of the system comprised of the base unit 3 and the expansion boards 5 is always connected to a respective one of the communication channels CH1-CH4 of the base unit 3, which corresponds to the sequential position of the expansion board or expansion module 5 along the communication channels formed by the mutually connected boards 3, 5. In general the j^{th} expansion board 5 which is plugged-in will be connected to the j^{th} communication channel CHj, such that a one-to-one relationship will be obtained between each plugged-in expansion board 5 and the relevant communication channel CHj of the base unit 3 and the communication channel CH of the base unit 3 connected to the device 9 of the j^{th} expansion board is the j^{th} communication channel CHj. Each expansion board or expansion module 5 is safely connected to the corresponding communication channel CHj by simply plugging-in the expansion board 5 to the available connectors, which can the connectors CHj of the base unit 3, in the case of the first expansion module or expansion board 5, or the output connectors CHm(O), including any dummy connector CH4(O), in the case of the second and subsequent expansion boards or expansion modules 5.

This further allows to correctly show in a web interface the position of the expansion boards or expansion module 5 with respect to the base unit 3 assisting the installer to properly configure the base unit 3.

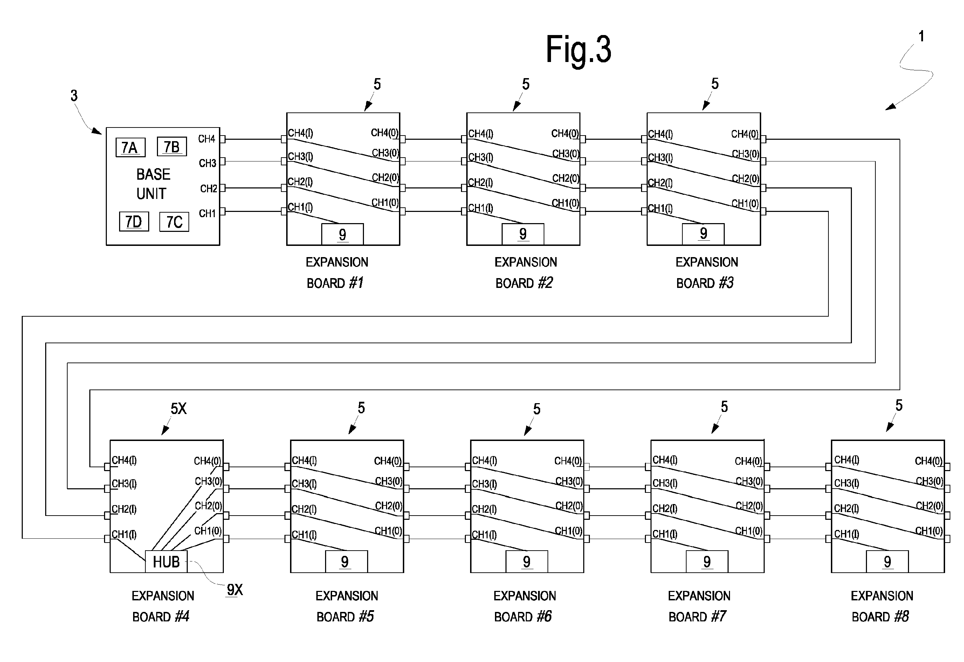

The system of Fig.2 enables plugging-in of a number of expansion modules or expansion boards corresponding to the number of communication channels CHj available on the central unit or base unit 3. This limitation can be overcome by using one or more hub units, which replicate the communication channels from the last one available. An embodiment using a hub unit is shown in the block diagram of Fig. 3. The same reference numbers are used to designate the same or corresponding components, parts or elements as in Fig.2, which will not be described again.

In Fig.3 the fourth expansion module or expansion board 5X (labeled "Expansion Board #4") counting from the base unit 3 comprises an electronic device 9X, which includes a hub. The hub replicates the input connector CH1(I) of Expansion Board #4, which is in data communication with the last communication channel (i.e. in this case the fourth communication channel CH4) of the base unit 3. The four output channels of the hub are labeled CH5, CH6, CH7, CH8 and represent four additional communication channels available for connecting additional expansion boards or expansion modules 5 to the base board or base unit 3 up to a number of four.

In the exemplary block diagram of Fig.3 four expansion modules or expansion boards 5, designated as "Expansion boards #n" with n=5 to 8 are shown, connected to the Expansion Board #4, in addition to the three expansion boards indicated as Expansion Boards #1, 2 and 3, which are connected to the base unit 3. The configuration and connector arrangement of these additional expansion boards 5 are the same as described for "Expansion Board #1 to Expansion Board #4 of Fig.2 and to Expansion Boards # to #3 in Fig.2.

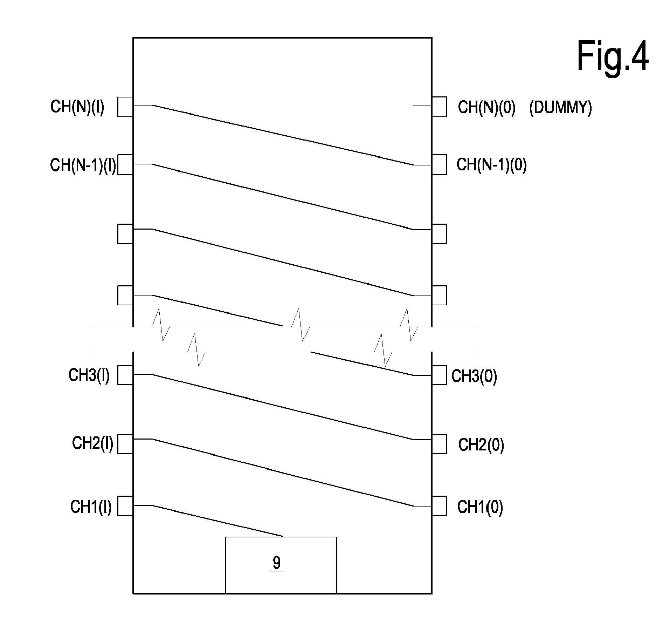

As mentioned, the total number of available communication channels on the base unit 3 and the total number of input connectors CHk(I) and output connectors CHm(O) can be different from those illustrated in Figs 2 and 3. A generic expansion board or expansion module 5 suitable for a system with a base unit 3 having N communication channels CHj is shown in Fig. 4. In this schematic representation, the expansion board or expansion module 5 comprises N input connectors CHk(I) (k = 1 to N) and N-1 output connectors CHm(O) (wherein m = 1 to N-1), wherein: the first input connector CH1(I) is electrically coupled to the electronic device 9; each subsequent k^{th} input connector CHk(I) (with k=2 to N) is orderly connected to the corresponding output connector CHm(O) [with m = 1 to (N-1)]. In general, therefore, the first input connector CH1(1) in each expansion board or expansion module 5 is used to put the electronic device 9 of the j^{th} expansion board or expansion module 5 in data communication with the respective j^{th} communication channel CHj of the base unit 3, while the remaining CH2(I) through CHN(I) input connectors are electrically coupled to the N-1 sequentially arranged output connectors CH1(O) to CH(N-1)(O).

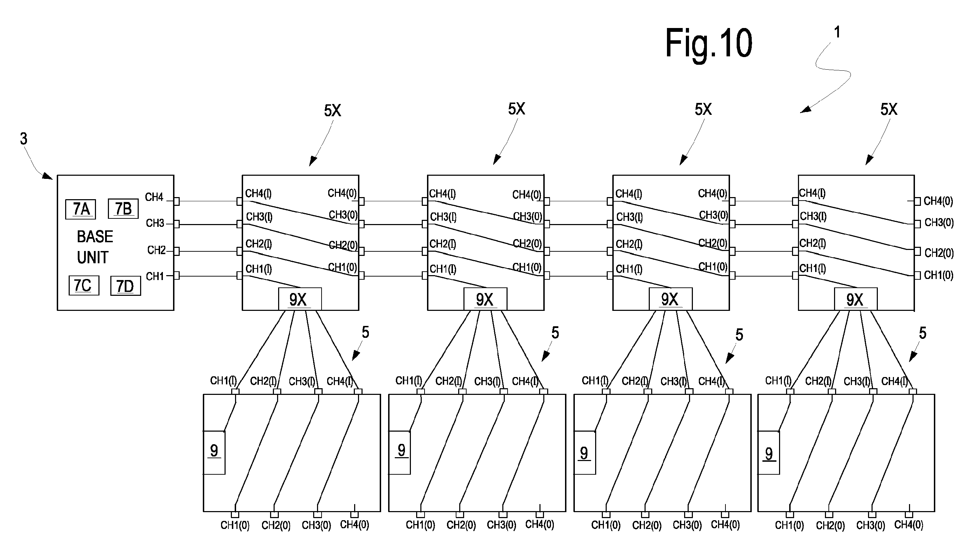

The number of expansion boards 5 which can be placed in electronic data communication with a base unit 3 can be increased by using more hubs as described in connection with Fig.3. For instance, in some embodiments N expansion boards, each provided with a hub 9X, can be connected to the base unit 3 in an arrangement similar to the one shown in Fig.2. Each said hub expansion board will then provide a set of four output connectors. Each said set of four output connectors could then be used as a set of four communication channels for a set of 1 to 4 expansion boards. An arrangement of this kind is shown by way of example in Fig.10, wherein the expansion boards containing a hub 9X are labeled 5X. Each such expansion board 5X provides four channels electrically connected to the corresponding four input connectors CHk(I) of four expansion boards 5. Each such expansion board 5 can be in turn connected, with an arrangement similar to the one shown in Fig.2, to three respective expansion boards (not shown). The system would in this case include a base unit 3, four expansion boards 5X with hubs 9X and sixteen expansion boards 5 with corresponding sixteen devices 9. Each communication channel CH1-CH4 of the base unit 3 is in data communication with the devices 9 of four expansion boards 5.

In the above described embodiments the coupling between the input connectors and the output connectors of each expansion board 5 is selected such that the electronic devices 9 of the sequentially arranged expansion boards 5 are connected to communication channels CHj of the base unit 3 in the same sequential order as the sequential order of the expansion boards 5, i.e. the electronic device 9 of the j^{th} expansion board, counting from the base unit, is connected to the j^{th} communication channel CHj of the base unit 3.

The above described arrangement, however, is not the only possible arrangement that can be used to electrically couple a plurality of electronic devices 9 of respective expansion boards 5 to corresponding communication channels CHj of a base unit 3, such that each electronic device 9 is placed in data communication with a specific communication channel CHj.

If N input connectors are provided, there are several possible positions according to which the N output connectors (including the dummy or isolated one) can be arranged. Some of them can be used to design the electric connections between input connectors, output connectors and electronic device 9, some cannot. More specifically, the following permutations shall be discarded:
- those where at least one input connector CHj(I) is connected to (i.e. corresponds to) an output connector CHj(O) in the same sequential position, i.e. where at least one output connector in the j^{th} position is electrically coupled to the input connector CHj(I) in the same j^{th} position,
- those where the positions of at least one pair of input connectors and the positions of the corresponding output connectors are merely one the reversal of the other; i.e. those where two generic input connectors CHm(I) and CHn(I) are electrically connected to the output connectors CHn(O) and CHm(O) respectively;
- and those where the input connector, which is electrically connected to the electronic device 9, is in the same position as the dummy output connector.

These three combinations would result in the electronic devices 9 of some expansion boards arranged in the system not being connected to a relevant communication channel CH of the base unit 3.

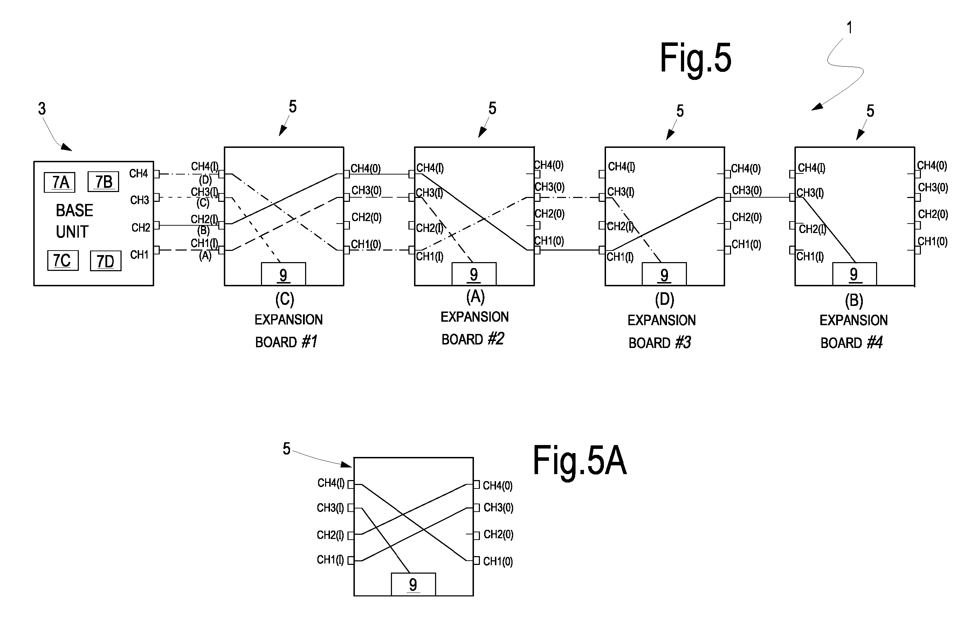

Figs. 5 and 5A schematically illustrate a system (Fig.5) and a single expansion board 5 thereof (Fig.5A), with a possible combination of the positions of input connectors and output connectors. More specifically, in Fig.5A a generic expansion board 5 is shown, with four input connectors CHj(I) and four output connectors CHj(O) (wherein j= 1 to 4). The electronic device 9 is connected to the input connector CH3(I), while the output connector CH2(O) is isolated (dummy connector), i.e. is not electrically coupled to any one of the input connectors. The following couplings of the remaining input connectors are adopted:
- input connector CH1(I) is electrically coupled to output connector CH3(O)
- input connector CH2(I) is electrically coupled to output connector CH4(O)
- input connector CH4(I) is electrically coupled to output connector CH1(O).

The expansion boards 5 of system 1 are again identical to one another as far as the arrangement of the input connectors, output connectors as well as the electric coupling there between and between the input connectors and the electronic device 9 are concerned.

In Fig.5 the electric coupling between the communication channels CHj of the base unit 3 and the four electronic devices 9 of four expansion boards 5 are shown, resulting from the inner electric wiring of each expansion board 5 as illustrated in Fig. 5A. Different lines are used to represent the connection between each electronic device 9 and the corresponding communication channel CHj of the base unit 3. More specifically:
- the electronic device 9 of the Expansion board #1 is connected to communication channel CH3,
- the electronic device 9 of the Expansion board #2 is connected to communication channel CH1,
- the electronic device 9 of the Expansion board #3 is connected to communication channel CH4,
- the electronic device 9 of the Expansion board #4 is connected to communication channel CH2.

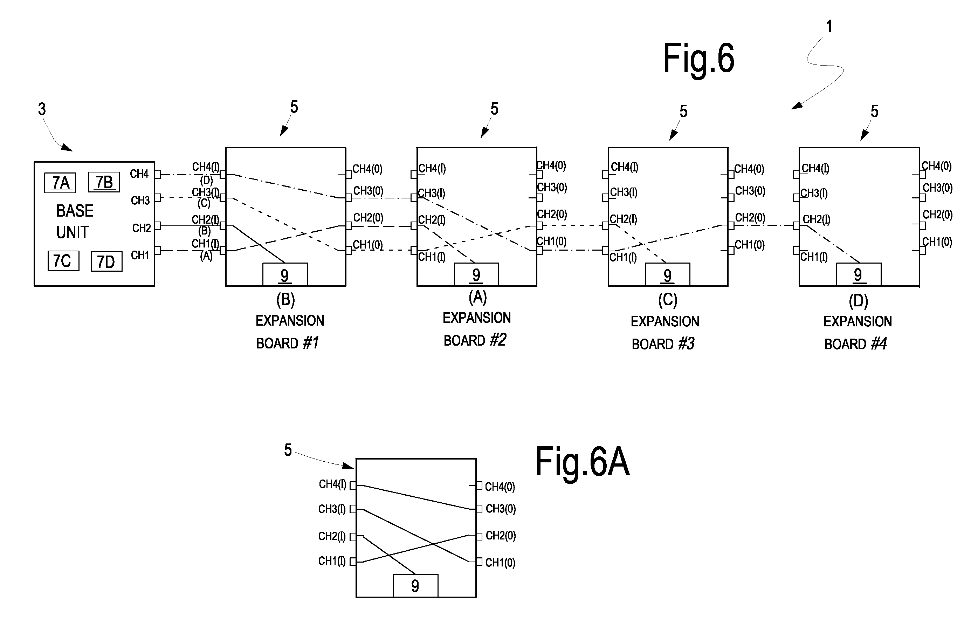

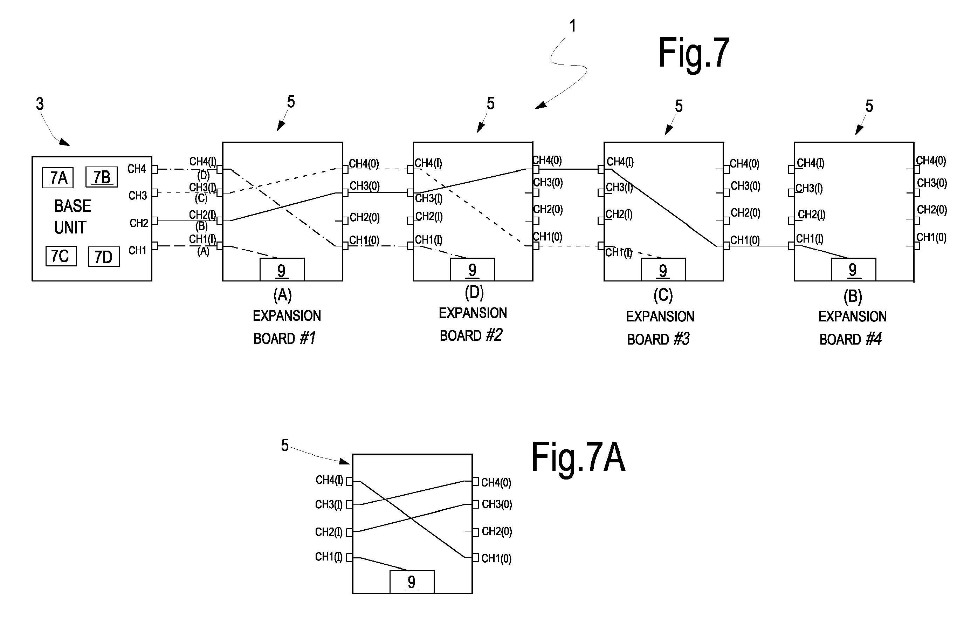

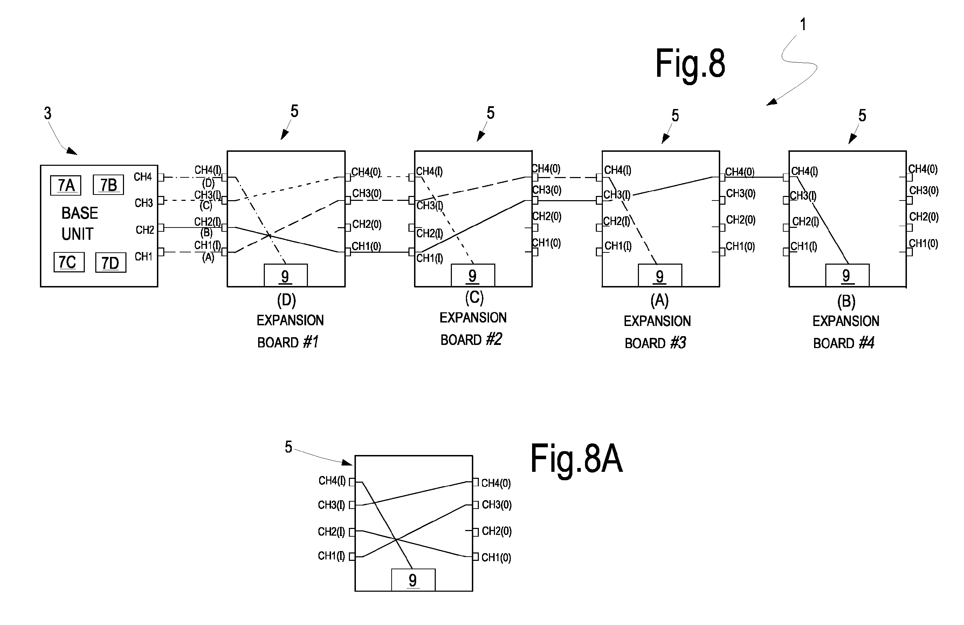

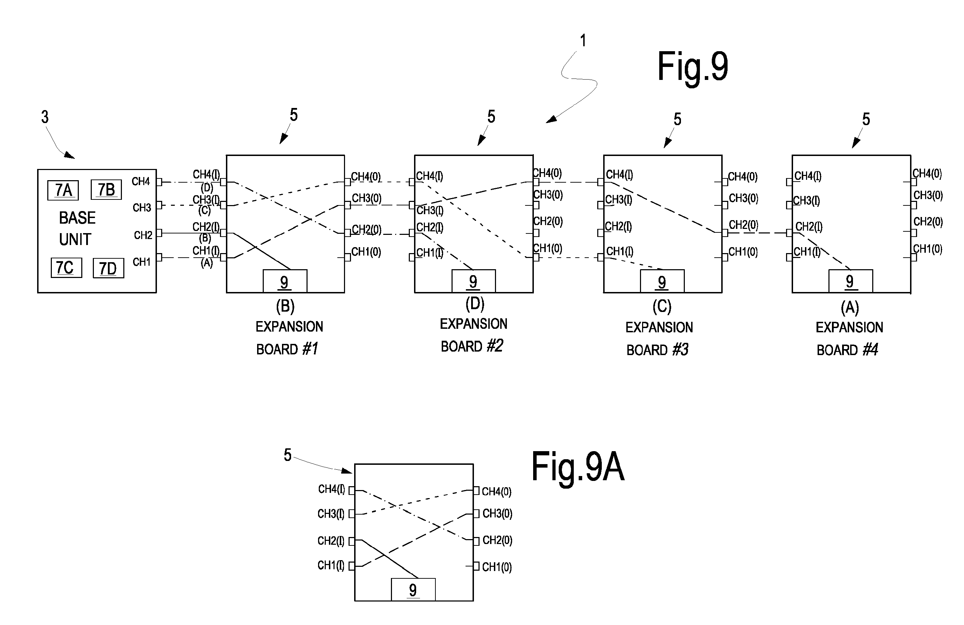

The following figures 6, 6A; 7, 7A; 8, 8A and 9, 9A illustrate, with the same criterion and the same reference numbers, four different possible electric couplings of the input connectors, output connectors and electronic device 9.

In the schemes illustrated in Figs. 5A, 6A, 7A, 8A and 9A, if the four input channels CHk(I) (k=1 to 4) of each expansion board 5 and the corresponding communication channels CHj (j1 to 4) of the base unit 3 are labeled A, B, C, D in sequence, the four electronic devices 9 of the sequentially arranged expansion boards 5 are connected to the four communication channels in the following order
Fig.5: C A D B
Fig.6: B A C D
Fig.7: A D C B
Fig.8: D C A B
Fig.9: B D C A

With the described arrangement, a bi-univocal relationship between the N communication channels CHj (j=1 to N) of the base unit 3 and the N electronic devices 9 of the N expansion boards is obtained. All the possible electric couplings between input connectors CHk(I) (k=1 to N), output connectors CHm(O) (m = 1 to N) and electronic device 9 results in N! (factorial of N=N*(N-1)*N-2)*(N-3) ... *1) possible permutations of the electronic devices 9. For any one of these possible combinations, the correlation between each electronic device 9 and communication channel CHj depends upon the position of the respective expansion board 5 with respect to the base unit 3.

In general terms, a self-assignment plug-in system comprised of N electronic expansion boards 5 and a base unit 3 having N communication channels CHj (j=1 to N) can be obtained provided that for each expansion board the following applies:
- N input connectors CHk(I) [wherein k = 1 to N] are provided;
- at least N-1 output connectors CHm(O) [wherein m = 1 to (N-1)] are provided;
- the input connectors and output connectors are arranged such that two expansion boards can be connected by plugging-in the output connectors of one board into the input connectors of an neighboring expansion board;
- one of said input connectors CHk(I) is electrically coupled to the electronic device 9 of the expansion board 5;
- the output connector CHm(O) arranged in the position corresponding to the input connector CHk(I) electrically coupled to the electronic device (9) is electrically coupled to one of the input connectors CHn(I);
- the remaining output connectors CHm(O) are electrically coupled each to a corresponding one of the remaining input connectors CHn(I), such that input and output connectors in the same position are not electrically coupled to one another;
- each pair of input connectors CHn(I) coupled to a corresponding pair of output connectors CHm(O) are connected such that their mutual positions are not simply reversed.

If there are as many output connectors as there are input connectors, one of the output connectors is isolated from the input connectors, i.e. does not propagate any electronic signal.

It can be understood from the above that in general terms, if N input connectors are available, the possible electric couplings between the input connectors on one side and the output connectors and the electronic device 9 on the other is N*N!. However, only N! of said combinations can be used, which correspond to N! permutations of the positions of the electronic devices 9.

The bi-univocal relationship between expansion boards 5 and communication channels CHj of the base unit 3 will not be maintained, however, if a hub is used, e.g. as in Fig. 3. In this case, the output communication channels made available by the hub (see Fig.3) will be in data communication with one of the communication channels of the base unit 3 (communication channel CH4 in the exemplary embodiment of Fig. 3), and consequently the additional expansion boards connected directly or indirectly to the hub 9X will be in data communication with communication channel CH4 of the base unit 3. A different connection will be provided if a different electric coupling between input connectors CHk(I) and output connectors CHm(O) of the expansion boards 5 is used, as illustrated in Figs. 5-9.

Similar arrangements can be provided, wherein more than one electronic device is arranged on each electronic expansion board 5, each said electronic device 9 being connected to a common input connector CHk(I).

In other embodiments, a plurality of electronic devices 9 can be arranged on the same expansion board, and each electronic device can be connected with a respective input connector CHk(I). A plurality of dummy output connectors can be provided, i.e. a number of active connectors CHm(O) can be provided, equal to the total number of input connectors, minus the number of input connectors CHk(I) electrically coupled with the electronic devices 9.

In yet further embodiments, a number of electronic devices can be provided, some of which are cumulatively connected to one input connector, while each one of the remaining electronic devices are individually connected to a respective input connector CHk(I). The number of output connectors will vary accordingly, following the same concept disclosed above: i.e. a number of active (in data communication) output connectors are provided, corresponding to the total number of input connectors, minus the number input connectors electrically coupled with the electronic devices of the electronic expansion board.

## Claims

1. An electronic expansion board (5) comprising:
- at least one electronic device (9) configured for data communication through at least one connector (CHk(I));
- a number of input connectors (CHk(I)) arranged according to an input connectors sequence and comprising at least a first input connector (CH1(I)) and a last input connector (CHn(I));
- a number of output connectors (CHm(O)) arranged according to an output connectors sequence;
wherein:
the output connectors and the input connectors are positioned on the electronic expansion board (5) such that, when two expansion boards (5) are connected to one another, the output connectors of one of said electronic expansion boards are plugged into corresponding input connectors of the other of said two electronic expansion boards;
one of the input connectors (CHk(I)) is electrically coupled to the electronic device (9) and each of the remaining input connectors (CHk(I)) is electrically coupled to a respective one of the output connectors (CHm(O));
the mutual positions of the output connectors (CHm(O)) in the output connectors sequence and the mutual positions of the input connectors (CHk(I)) electrically coupled thereto in the input connectors sequence are such that, if a number of electronic expansion boards (5) equal to the number of input connectors are sequentially connected to one another from a first one to a last one by plugging-in the input connectors (CHk(I)) and output connectors (CHm(O)) of neighboring electronic expansion boards (5), the electronic device (9) of each electronic expansion board is electrically coupled to a respective one of the input connectors (CHk(I)) of the first electronic expansion board (9); wherein said electronic expansion boards (5) have the same arrangement of input connectors, output connectors and electric coupling between input connectors, output connectors and electronic device.

2. The electronic expansion board (5) of claim 1, wherein the position of each input connector (CHk(I)) in the input connectors sequence is different from the position of the respective output connector (CHm(O)), electrically coupled thereto, in the output connectors sequence.

3. The electronic expansion board of claim 2, wherein two input connectors (CHk(I)) of any pair of input connectors are electrically coupled to two corresponding output connectors (CHm(O)), the positions whereof in the output connectors sequence is not the reversal of the positions of said pair of input connectors in the input connectors sequence.

4. The electronic expansion board of one or more of the preceding claims, wherein the number of output connectors (CHm(O)) is the same as the number of input connectors (CHk(I)), and one of said output connectors (CHm(O)) is electrically isolated from all the input connectors (CHk(I)).

5. The electronic expansion board of claim 4, wherein the position in the input connectors sequence of the input connector (CHk(I)), which is electrically coupled to the electronic device (9), is different from the position in the output connectors sequence of the output connector (CHm(O)), which is isolated from all the input connectors (CHk(I)).

6. The electronic expansion board (5) of one or more of the preceding claims, comprising at least one additional input connector (CHk(I)) or preferably a plurality of additional input connectors (CHk(I)) between the first input connector and the last input connector.

7. The electronic expansion board of one or more of the preceding claims, wherein the first input connector (CHk(I)) of the input connectors sequence is electrically coupled to the electronic device (9); and wherein the subsequent input connector(s) is(are) electrically coupled to a corresponding number of output connectors CHm(O)) in the output connectors sequence, maintaining the same sequential order.

8. The electronic expansion board of claim 7, wherein the last output connector (CHm(O)) in the output connectors sequence is electrically isolated from all the input connectors (CHk(I)).

9. A system comprising: a base unit (3) with a number of communication channels (CHj) available thereon and at least an expansion board (5) according to any one of the preceding claims

10. The system of claim 9, wherein the number of communication channels (CHj) of the base unit (3) is identical to the number of input channels (CHk(I)) of the expansion board (5).

11. The system of claim 9 or 10, comprising a plurality of expansion boards (5).

12. The system of claim 9, 10 or 11, further comprising a hub unit (5X) comprised of a hub (9X) having an input connector and a plurality of output connectors (CHm(O)).

13. The system of claim 12, wherein the hub unit comprises a number of output connectors (CHm(O)) equal to the number of input connectors (CHk(I)) of said expansion board (5).

14. The system of claim 12 or 13, wherein at least one expansion board is connected with the input connectors thereof to the output connectors of the hub unit.
